# EUROPÄISCHE PATENTSCHRIFT

(11) **EP 3 454 441 B1**
(45) Veröffentlichungstag und Bekanntmachung des Hinweises auf die Patenterteilung: **19.05.2021**
(21) Anmeldenummer: 18192930.8
(22) Anmeldetag: 06.09.2018
(51) Int. Cl.: H02G 3/16

(54) **ELEKTRISCHE VERBINDUNGSDOSE**
ELECTRICAL JUNCTION BOX
BOÎTIER DE CONNEXION ÉLECTRIQUE

(30) Priorität: 08.09.2017 DE 102017120824
(43) Veröffentlichungstag der Anmeldung: 13.03.2019
(73) Patentinhaber: Günther Spelsberg GmbH & Co. KG, 58579 Schalksmühle (DE)
(72) Erfinder: Bierbaum, Volker, 58579 Schalksmühle (DE); Eichstädt, Andreas, 58579 Schalksmühle (DE); Gembruch, Karsten, 58579 Schalksmühle (DE)
(74) Vertreter: Michalski Hüttermann & Partner Patentanwälte mbB

(56) Entgegenhaltungen:
- CN-U- 205 863 832
- FR-A1- 2 970 383
- US-A- 2 788 188

## Beschreibung

Die Erfindung betrifft eine elektrische Verbindungsdose mit einem einen Gehäuseboden und Gehäusewände aufweisenden und mit einem Deckel verschließbaren Gehäuse und einem in dem Gehäuse vorgesehenen Verbindungselement zum Verbinden von dem Gehäuse zugeführten elektrischen Leitungen miteinander und/oder mit anderen elektrischen oder elektronischen Einrichtungen, wobei das Verbindungselement Anschlusseinrichtungen zum elektrischen Anschließen der Leitungen und einen Befestigungsabschnitt aufweist, in dem Gehäuseboden wenigstens eine Kulissenführung in Form einer Nut vorgesehen ist und der Befestigungsabschnitt ein Eingriffselement aufweist, das in die Kulissenführung eingreift.

Elektrische Verbindungsdosen sind aus der Praxis gut bekannt. Insbesondere werden derartige elektrische Verbindungsdosen auch als Elektroinstallationsgehäuse bezeichnet. Elektrische Verbindungsdosen werden in den unterschiedlichsten Anwendungsgebieten zum Anschluss, zum Abzweigen und/oder zur Verbindung von elektrischen Leitern miteinander oder mit anderen elektrischen oder elektronischen Einrichtungen verwendet, wobei als Anschlusseinrichtungen zum elektrischen Anschließen der Leitungen insbesondere elektrische Klemmen verwendet werden. Elektrische Verbindungsdosen sind auch in Form von Brandschutzgehäusen bekannt, die einer definierten Brandschutzklasse genügen und damit für eine vorbestimmte Zeitdauer einen Funktionserhalt gewährleisten.

Aus der EP 0 307 360 A2 ist eine gattungsgemäße Rangierdose für die Elektroinstallation bekannt, bei der der Dosenboden im Rechteck bzw. kreuzförmig angeordnete Nuten aufweist, die mit Wülsten gesäumt sind und welche zum Eingriff selbstschneidender Schrauben dienen, mit denen Klemmen, Schienen und andere Einrichtungen am Dosenboden befestigt werden können.

Die FR 2 970 383 A1 zeigt eine Vorrichtung, welche Vorsprünge zum wahlweisen Befestigen einer Verbindung innerhalb eines Verbindungsraums in verschiedenen Positionen beinhaltet. Die Vorsprünge ragen in eine Bodenwand eines Gehäuses zur Befestigung der Verbindung an der Bodenwand hinein, wo Längsenden eines länglichen Klemmkörpers durch die Vorsprünge an der Verbindung befestigt sind. Die Vorsprünge sind über einen Umfang eines Rings verteilt und die Verbindung umfasst Langlöcher, die in unterschiedlichen Abständen voneinander ausgebildet sind. Die Verbindung bildet zusammen mit den Vorsprüngen einen Bajonettverschluss.

Die US 2 788 188 A zeigt eine Vorrichtung zur elektrischen Verkabelung und insbesondere eine Vorrichtung, um eine Steckdose an einer Wandstruktur zu befestigen.

CN 205 863 832 U zeigt eine weitere Vorrichtung zur Elektroinstallation.

Ausgehend davon ist es die Aufgabe der Erfindung, eine derartige elektrische Verbindungsdose anzugeben, bei der der Installationsvorgang des Verbindungselements mit den Anschlusseinrichtungen zum elektrischen Anschließen von elektrischen Leitungen vereinfacht ist.

Diese Aufgabe wird durch den Gegenstand des Patentanspruchs 1 gelöst. Bevorzugte Weiterbildungen der Erfindung sind in den Unteransprüchen beschrieben.

Erfindungsgemäß ist somit eine elektrische Verbindungsdose vorgesehen mit einem einen Gehäuseboden und Gehäusewände aufweisenden und mit einem Deckel verschließbaren Gehäuse und einem in dem Gehäuse vorgesehenen Verbindungselement zum Verbinden von dem Gehäuse zugeführten elektrischen Leitungen miteinander und/oder mit anderen elektrischen oder elektronischen Einrichtungen, wobei
das Verbindungselement Anschlusseinrichtungen zum elektrischen Anschließen der Leitungen und einen Befestigungsabschnitt aufweist,
in dem Gehäuseboden wenigstens eine Kulissenführung in Form einer Nut vorgesehen ist und
der Befestigungsabschnitt ein Eingriffselement aufweist, das in die Kulissenführung eingreift,
dadurch gekennzeichnet, dass
an dem Gehäuseboden eine in den Innenraum des Gehäuses hineinragende Führungseinrichtung angeordnet ist, und
der Befestigungsabschnitt parallel zum Gehäuseboden verläuft und ein Langloch aufweist, in das die Führungseinrichtung hineinreicht.

Es ist somit ein maßgeblicher Punkt der Erfindung, dass der Gehäuseboden der erfindungsgemäßen elektrischen Verbindungsdose mit einer Führungseinrichtung versehen ist, die in ein Langloch eingeführt ist, das im Befestigungsabschnitt des Verbindungselements vorgesehen ist. Auf diese Weise kann das Verbindungselement mit seinen Anschlusseinrichtungen zum elektrischen Anschließen der elektrischen Leitungen längs seines Langlochs, geführt von der Führungseinrichtung, beim Installationsvorgang in dem Gehäuse bewegt werden. Dies verbessert die Handhabbarkeit des Verbindungselements bei seiner Installation, da es nicht mehr frei beweglich ist, sondern mittels des mit der Führungseinrichtung zusammenwirkenden Befestigungsabschnitts geführt wird.

Gemäß einer ersten alternativen bevorzugten Weiterbildung der Erfindung ist die Führungseinrichtung von einer Schraube gebildet, mittels derer das Verbindungselement mit seinem Befestigungsabschnitt an dem Gehäuseboden fixierbar ist. Das bedeutet, dass die Führungseinrichtung nicht nur eine Führung des Verbindungselements bei seiner Installation übernimmt, sondern darüber hinaus, wenn die richtige Stellung des Verbindungselements in dem Gehäuse gefunden ist, zur Fixierung des Verbindungselements dienen kann.

In diesem Zusammenhang ist gemäß einer bevorzugten Weiterbildung der Erfindung ferner vorgesehen, dass das Eingriffselement derart als Eingriffsnase ausgestaltet ist, dass es lediglich eine Führung, jedoch keine Fixierung in der Kulissenführung erlaubt. Gemäß dieser bevorzugten Ausgestaltung der Erfindung erfolgt die Fixierung des Verbindungselements in dem Gehäuse also ausschließlich mit der zuvor beschriebenen Schraube, die auch als Führungseinrichtung dient. Konkret ist es gemäß dieser bevorzugten Ausgestaltung der Erfindung also so, dass das Verbindungselement, geführt durch die als Schraube ausgestaltete Führungseinrichtung einerseits und geführt durch das als Eingriffsnase ausgestaltete Eingriffselement andererseits, in dem Gehäuse bewegbar ist, bis die gewünschte Installationsstellung des Verbindungselements gefunden ist. Dann wird die als Führungseinrichtung dienende Schraube angezogen, so dass das Verbindungselement in dem Gehäuse fixiert wird, nämlich indem der parallel zum Gehäuseboden verlaufende Befestigungsabschnitt des Verbindungselements an den Gehäuseboden angedrückt wird.

Bei dieser ersten alternativen Ausgestaltung der Erfindung kann es grundsätzlich vorgesehen sein, dass die als Führungseinrichtung dienende Schraube, mit der das Verbindungselement mit seinem Befestigungsabschnitt an dem Gehäuseboden fixierbar ist, in dem Gehäuseboden selbst eingeschraubt ist. Das Gewinde für diese Schraube kann also im Gehäuseboden selbst vorgesehen sein. Gemäß einer bevorzugten Weiterbildung der Erfindung ist die Schraube jedoch mit einer metallischen, auf der Außenseite des Gehäusebodens vorgesehenen Befestigungsvorrichtung verbunden, mit der das Gehäuse an einer Wand befestigbar ist. Gemäß dieser Ausgestaltung ist die Schraube also durch eine in dem Gehäuseboden vorgesehene Bohrung hindurchgeführt und mit der auf der Außenseite des Gehäusebodens angeordneten Befestigungsvorrichtung verbunden. Diese Befestigungsvorrichtung reicht vorzugsweise wenigstens an einer Seite mit einem Abschnitt über den Gehäuseboden hinaus, so dass der über den Gehäuseboden hinausreichende Abschnitt der Befestigungsvorrichtung bei der Befestigung des Gehäuses an einer Wand zugänglich ist.

Diese Ausgestaltung ermöglicht es z.B. die elektrische Verbindungsdose vollständig vorzukonfektionieren und sie dann mit schon geschlossenem Deckel an einer Wand zu montieren, da der Gehäuseboden für die Montage an der Wand nicht mehr zugänglich sein muss. Vielmehr ist der über den Gehäuseboden hinausreichende Abschnitt der Befestigungsvorrichtung zugänglich, der z.B. seinerseits mit einer Bohrung versehen sein kann, die für eine Befestigung der Verbindungsdose mittels einer Schraube an der Wand dienen kann. Ganz besonders bevorzugt weist die Befestigungsvorrichtung nicht nur an einer, sondern an zwei einander gegenüberliegenden Seiten jeweils einen Abschnitt auf, der jeweils über den Gehäuseboden hinausreicht und mit dem das Gehäuse an der Wand befestigt werden kann.

Weiterhin ist bei dieser ersten alternativen Ausgestaltung der Erfindung gemäß einer bevorzugten Weiterbildung vorgesehen, dass die Befestigungsvorrichtung aus einem Metallmaterial hergestellt ist. Auf diese Weise kann auch für einen Brandfall, zumindest für eine gewisse Zeit, gewährleistet werden, dass die in dem Gehäuse vorgesehenen Einrichtungen an der Wand montiert bleiben, selbst wenn das Gehäuse selbst aus Kunststoff hergestellt ist und aufgrund des Brandes beschädigt wird bzw. teilweise bzw. vollständig verschwindet. Auf diesen Aspekt wird im Folgenden nochmals eingegangen werden.

Außerdem ist gemäß einer bevorzugten Weiterbildung der Erfindung vorgesehen, dass die Schraube in abgedichteter Weise durch den Gehäuseboden auf die Außenseite des Gehäuses geführt ist. Auf diese Weise kann die Verbindungsdose trotz der nach außen geführten Schraube weiterhin eine vorbestimmte Schutzart, wie IP 65 oder IP 68, aufweisen. Dabei ist es ganz besonders bevorzugt, dass die Schraube zur Abdichtung des Gehäuses von einem Abdichtelement umgeben ist, das eine Öffnung zur Betätigung der Schraube aufweist, wobei diese Öffnung mittels eine Abdichtdeckels in abdichtender Weise verschließbar ist. Diese Ausgestaltung ermöglicht es, dass die Schraube bei abgenommenem Abdichtdeckel betätigt werden kann, also z.B. angezogen werden kann, um das Verbindungselement am Gehäuseboden zu fixieren. Gleichzeitig kann jedoch nach der Installation des Verbindungselements durch das Aufsetzen des Abdichtdeckels eine vollständige Abdichtung der Durchführung der Schraube durch den Gehäusedeckel erzielt werden. Vorzugsweise ist der Abdichtdeckel mit dem Abdichtelement unverlierbar verbunden, z.B. mittels eines Filmscharniers.

Gemäß einer zweiten alternativen Ausgestaltung der Erfindung ist die Führungseinrichtung als Führungsstift derart ausgestaltet, dass sie lediglich eine Führung jedoch keine Fixierung in der Kulissenführung erlaubt. In diesem Zusammenhang ist insbesondere ferner vorgesehen, dass das Eingriffselement von einer in die Kulissenführung einschraubbaren Schraube gebildet wird, mittels derer das Verbindungselement mit seinem Befestigungsabschnitt an dem Gehäuseboden fixierbar ist. Dies stellt also insofern ein alternatives Konzept für eine bevorzugte Weiterbildung der Erfindung dar, als dass hier die Führungseinrichtung tatsächlich nur zur Führung dient und die Fixierung des Verbindungselements mit wenigstens einer in eine Kulissenführung einschraubbare Schraube gewährleistet wird.

Dazu ist vorzugsweise ferner vorgesehen, dass im Befestigungsabschnitt des Verbindungselements wenigstens ein Paar von Bohrungen angeordnet ist, die auf einander gegenüberliegenden Seiten des Langlochs gebildet sind und deren Verbindungslinie vorzugsweise im rechten Winkel zum Langloch verläuft. Mit Hilfe dieser Bohrungen können Schrauben in derartige Kulissenführungen eingeschraubt werden, die rechts bzw. links von der als Führungsstift ausgestalteten Führungseinrichtung vorgesehen sind.

Grundsätzlich kann bei beiden alternativen Ausgestaltungen der Erfindung und auch ansonsten die Führungseinrichtung an unterschiedlichen Orten in dem Gehäuse vorgesehen sein. Gemäß einer bevorzugten Weiterbildung der Erfindung ist die Führungseinrichtung jedoch zentral in dem Gehäuseboden angeordnet. Dies ermöglicht eine maximal große Flexibilität bei der Anordnung und Orientierung des Verbindungselements.

Insbesondere kommen eine Vielzahl von symmetrischen Installationsgeometrien in Betracht. In diesem Zusammenhang ist es bevorzugt, dass eine Mehrzahl von gerade verlaufenden Kulissenführungen vorgesehen sind, die in dem Gehäuseboden sternförmig angeordnet sind. Ganz besonders bevorzugt gehen diese Kulissenführungen sternförmig von der zentralen Führungseinrichtung aus. Die zentrale Führungseinrichtung bildet also die Mitte, von der aus gerade verlaufende Kulissenführungen in Richtung der Gehäusewände des Gehäuses führen.

Die Anzahl der Kulissenführungen kann dabei unterschiedlich sein. Grundsätzlich sind z.B. vier Kulissenführungen möglich, die jeweils einen Winkel von 90° zu einer jeweils benachbarten Kulissenführung bilden und damit insgesamt ein Kreuz bilden. Ganz besonders bevorzugt sind jedoch insgesamt acht Kulissenführungen vorgesehen, von denen jeweils zwei längs einer gemeinsamen Linie aufeinander gegenüberliegenden Seiten der zentralen Führungseinrichtung angeordnet sind, wobei der Winkel zwischen einander benachbarten Kulissenführungen jeweils 45° beträgt. Auf diese Weise sind Kulissenführungen möglich, die jeweils senkrecht auf eine Gehäusewand hinführen bzw. genau in eine Ecke des Gehäuses weisen, wenn eine quadratische Grundform des Gehäusebodens vorgesehen ist.

Bisher ist immer die Rede von einem Eingriffselement des Befestigungsabschnitts des Verbindungselements gewesen. Grundsätzlich kann ein einziges Eingriffselement ausreichend sein, um eine Führung bzw. Fixierung des Verbindungselements in dem Gehäuse zu ermöglichen. Gemäß einer bevorzugten Weiterbildung der Erfindung weist der Befestigungsabschnitt jedoch zwei Eingriffselemente auf, die auf zwei verschiedenen Seiten des Langlochs in jeweils eine Kulissenführung eingreifen. Insbesondere ist es ganz besonders bevorzugt, dass die beiden Eingriffselemente auf zwei verschiedenen Seiten der Führungseinrichtung vorgesehen sind und außerhalb des Langlochs in jeweils eine Kulissenführung eingreifen

Grundsätzlich können die Anschlusseinrichtungen des Verbindungselements zum elektrischen Anschließen der Leitungen an verschiedenen Stellen im Gehäuse und insbesondere auch direkt am Boden angeordnet sein. Gemäß einer bevorzugten Weiterbildung der Erfindung sind die Anschlusseinrichtungen des Verbindungselements zum elektrischen Anschließen der Leitungen im Abstand zum Gehäuseboden angeordnet. Insbesondere ist es auf diese Weise möglich, unter den Anschlussklemmen Leitungen hindurchzuführen, was eine übersichtliche und platzsparende elektrische Installation innerhalb der Verbindungsdose ermöglicht.

Schließlich ist zur Ausbildung eines Brandschutzgehäuses vorgesehen, dass einerseits das Gehäuse aus einem Kunststoffmaterial besteht und andererseits das Verbindungselement und die Anschlusseinrichtungen ausschließlich aus Metall- bzw. Keramikmaterialien bestehen. Auf diese Weise können die elektrischen Installationen auch im Brandfall, zumindest für eine vorbestimmte Zeit, weiter funktionsfähig bleiben, selbst wenn das Gehäuse mit seinem Kunststoffmaterial aufgrund des Brandes verschwindet. Dies ist ganz besonders bevorzugt in Kombination mit der oben beschriebenen Ausgestaltung der ersten alternativen Weiterbildung der Erfindung, gemäß der eine metallische Befestigungseinrichtung zur Befestigung der elektrischen Verbindungsdose an einer Wand vorgesehen und die Führungseinrichtung von einer Schraube gebildet ist, die an der metallischen Befestigungseinrichtung befestigt ist.

Nachfolgend wird die Erfindung anhand eines bevorzugten Ausführungsbeispiels unter Bezugnahme auf die Zeichnung weiter erläutert. In der Zeichnung zeigen:
- Fig. 1: eine elektrische Verbindungsdose gemäß einem ersten bevorzugten Ausführungsbeispiel der Erfindung in Draufsicht,
- Fig. 2: die elektrische Verbindungsdose gemäß dem ersten bevorzugten Ausführungsbeispiel der Erfindung in Rückansicht,
- Fig. 3: die elektrische Verbindungsdose gemäß dem ersten bevorzugten Ausführungsbeispiel der Erfindung in einer perspektivischen Ansicht,
- Fig. 4: die elektrische Verbindungsdose gemäß dem ersten bevorzugten Ausführungsbeispiel der Erfindung in einer Schnittansicht,
- Fig. 5: ein Detail der elektrischen Verbindungsdose gemäß dem ersten bevorzugten Ausführungsbeispiel der Erfindung in einer vergrößerten Schnittansicht,
- Fig. 6: die elektrische Verbindungsdose gemäß dem ersten bevorzugten Ausführungsbeispiel der Erfindung mit einem anders orientierten Verbindungselement in einer perspektivischen Ansicht,
- Fig. 7: eine elektrische Verbindungsdose gemäß einem zweiten bevorzugten Ausführungsbeispiel der Erfindung in Draufsicht und
- Fig. 8: die elektrische Verbindungsdose gemäß dem zweiten bevorzugten Ausführungsbeispiel der Erfindung in einer perspektivischen Ansicht.

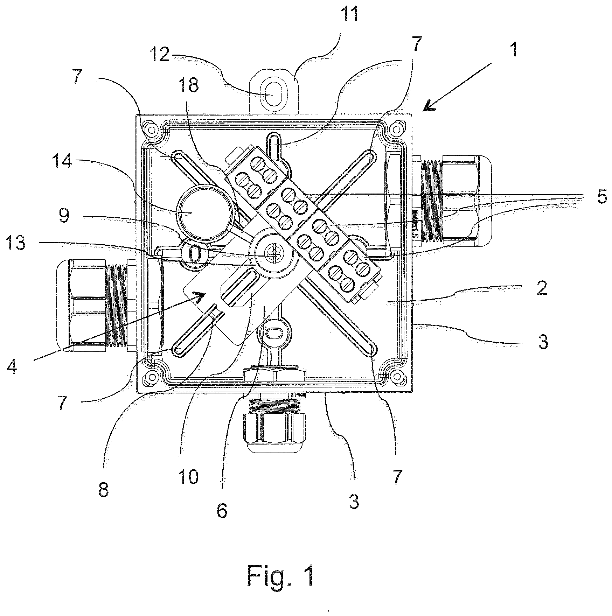

Fig. 1 zeigt eine elektrische Verbindungsdose gemäß einem ersten bevorzugten Ausführungsbeispiel der Erfindung in Draufsicht. Die elektrische Verbindungsdose weist ein Gehäuse 1 mit einem Gehäuseboden 2 und Gehäusewänden 3 auf. Das Gehäuse 1 ist mit einem nicht weiter dargestellten Deckel verschließbar, so dass mit dem Gehäuse 1 eine vorbestimmte Schutzart, wie IP 65 erzielbar ist.

In dem Gehäuse 1 ist ein Verbindungselement 4 zum Verbinden von dem Gehäuse 1 zuführbaren elektrischen Leitungen miteinander und/oder mit anderen elektrischen oder elektronischen Einrichtungen angeordnet. Das Verbindungselement 4 weist Anschlusseinrichtungen 5 in Form von Schraubklemmen zum elektrischen Anschließen der Leitungen auf. Außerdem ist das Verbindungselement 4 mit einem Befestigungsabschnitt 6 versehen, in dem ein Langloch 10 ausgeführt ist. In dem Gehäuseboden 2 sind acht Kulissenführungen 7 in Form einer jeweiligen Nut vorgesehen. Diese Kulissenführungen 7 gehen zentral von der Mitte des Gehäusebodens 2 aus, wobei einander benachbarte Kulissenführungen 7 jeweils einen Winkel von 45° miteinander einschließen.

Der Befestigungsabschnitt 6 des Verbindungselements 4 weist ein Eingriffselement 8 in Form einer Eingriffsnase auf, die in die Kulissenführung 7 eingreift. Ein zweites solches Eingriffselement 8 ist unterhalb der Anschlusseinrichtungen 5 angeordnet und deshalb in der vorliegenden Draufsicht nicht erkennbar. An dem Gehäuseboden 2 ist zentral eine in den Innenraum des Gehäuses 1 hineinragende Führungseinrichtung 9 in Form einer Schraube angeordnet. Die Schraube ist durch das Langloch 10 des Befestigungsabschnitts 6 des Verbindungselements 4 hindurchgeführt. Dadurch, dass der Befestigungsabschnitts 6 parallel zum Gehäuseboden 2 verläuft, ist das Verbindungselement 4 mit seinem Befestigungsabschnitt 6 an dem Gehäuseboden 2 fixierbar, indem die Schraube angezogen wird. Die Eingriffselemente 8 in Form einer jeweiligen Eingriffsnase dienen nur der Führung des Verbindungselements 4 und nicht zu seiner Fixierung in den Kulissenführungen 7.

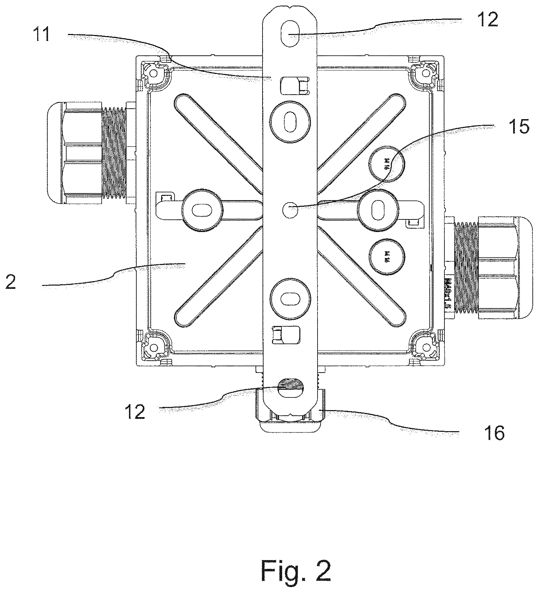

Auf der Rückseite des Gehäuses 1 ist die als Schraube ausgestaltete Führungseinrichtung 9 mit einer metallischen, auf der Außenseite des Gehäusebodens 2 vorgesehenen Befestigungsvorrichtung 11 verbunden. Die Befestigungsvorrichtung 11 weist Befestigungsöffnungen 12 auf, so dass das Gehäuse 1 mittels Schrauben an einer Wand befestigbar ist. Dazu weist die Befestigungsvorrichtung 11 an zwei einander gegenüberliegenden Seiten jeweils einen Abschnitt auf, der über den Gehäuseboden 2 hinausreicht, so dass der über den Gehäuseboden 2 hinausreichende Abschnitt der Befestigungsvorrichtung 11 bei der Befestigung des Gehäuses 1 an der Wand zugänglich ist. Wie Fig. 2 entnehmbar, die eine Rückansicht der vorliegenden Dose zeigt, liegt allerdings einer dieser Abschnitte unterhalb einer Kabelverschraubung 16, so dass er von vorne her nicht zugänglich und damit in Fig. 1 auch nicht erkennbar ist.

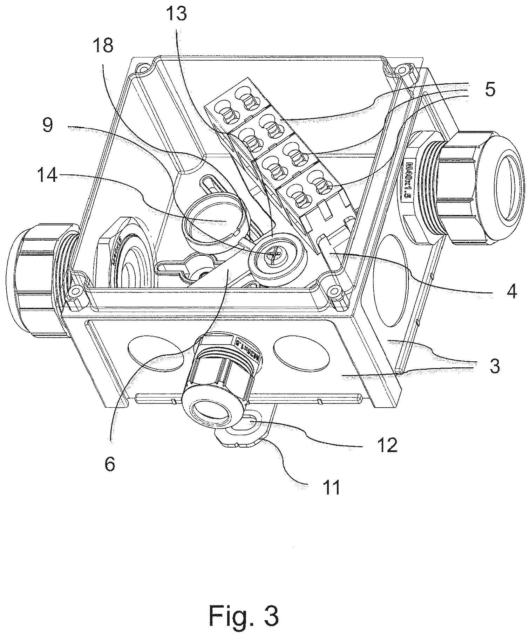

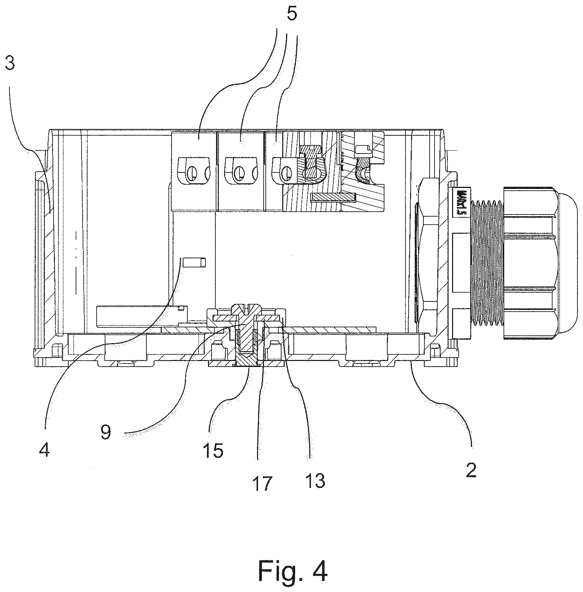

Wesentlich bei der vorliegenden elektrischen Verbindungsdose ist weiterhin, dass die als Schraube ausgestaltete Führungseinrichtung 9 in abgedichteter Weise durch den Gehäuseboden 2 auf die Außenseite des Gehäuses 1 geführt ist. Dazu ist die Schraube von einem Abdichtelement 13 umgeben, wie insbesondere den Fig. 3, 4 und 5 entnehmbar. Dieses Abdichtelement 13 weist eine Öffnung zur Betätigung der Schraube auf, wobei diese Öffnung mittels eine Abdichtdeckels 14 in abdichtender Weise verschließbar ist. Der Abdichtdeckel 14 ist mit dem Abdichtelement 13 mittels eines Filmscharniers 18 unverlierbar verbunden.

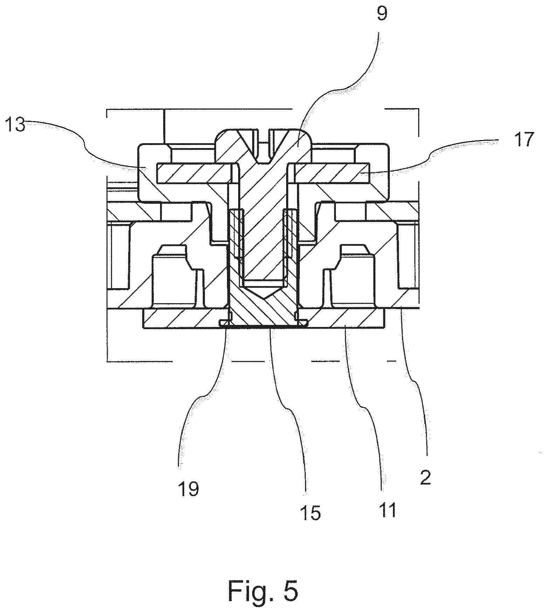

Die genaue Konstruktion ist der Detailansicht aus Fig. 5 entnehmbar. Dort ist gezeigt, wie die als Schraube ausgestaltete Führungseinrichtung 9 in ein Gegenelement 15 eingeschraubt ist, das seinerseits von außen durch die Befestigungsvorrichtung 11 hindurchgeführt ist. Aufgrund einer Auskragung 19 des Gegenelements 15 drückt dieses beim Anziehen der Schraube die Befestigungsvorrichtung 11 von außen an den Gehäuseboden 2. Die Schraube liegt allerding nicht direkt auf der Innenseite des Gehäusebodens 2 auf. Vielmehr ist die Schraube von dem Abdichtelement 13 umgeben, der seinerseits auf dem Gehäuseboden 2 aufliegt. Zwischen dem Kopf der Schraube und dem Abdichtelement 13 ist eine Unterlegscheibe 17 vorgesehen. Um nach der Installation des Verbindungselements 4, also nach Festziehen der Schraube, eine vorbestimmte Schutzart, wie IP 65, zu gewährleisten, wird abschließend die Öffnung des Abdichtelements 13 mittels des Abdichtdeckels 14 verschlossen, der in abdichtender Weise auf die Oberseite des Abdichtelements 13 aufgeklemmt wird.

Vorliegend besteht das Gehäuse 1 aus einem Kunststoffmaterial während das Verbindungselement 4 und die Anschlusseinrichtungen 5 ausschließlich aus Metall- bzw. Keramikmaterialien bestehen. Auf diese Weise kann gemäß dem vorliegend beschriebenen Ausführungsbeispiel ein Brandschutzgehäuse mit einer definierten Brandschutzklasse bereitgestellt werden, da selbst bei aufgrund eines Brandes verschwindendem Gehäuse 1 der Funktionserhalt durch das Verbindungselement 4 und den Anschlusseinrichtungen 5 aus nichtbrennbarem Material gewährleistet werden kann, die ihrerseits mittels der metallischen und damit ebenfalls nicht brennbaren Befestigungsvorrichtung 11 an einer Wand befestigt sind. In Normalfall dient das Gehäuse 1 also als Wasser-, Staub- und Berührschutz. Im Brandfall allerdings kommt es für den Funktionserhalt nicht auf das Gehäuse 1 an, da die Funktionen "elektrischer Anschluss" und "Befestigung an einer Wand" unabhängig vom Gehäuse 1 verwirklicht sind.

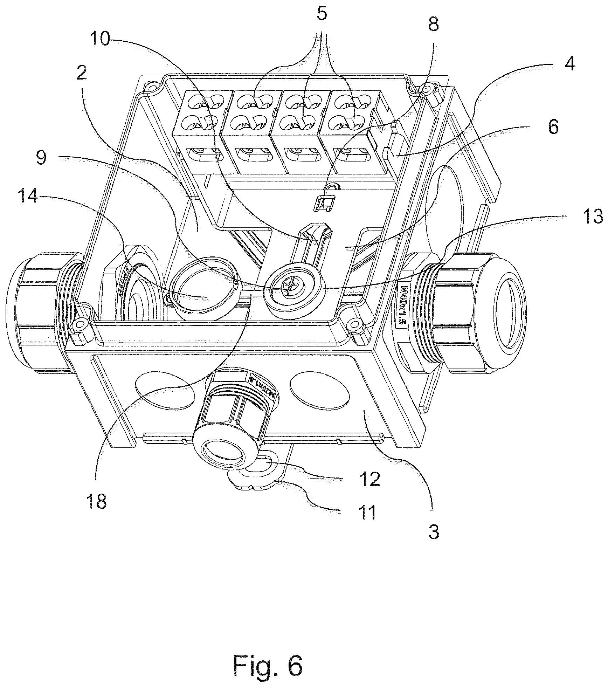

Aus Fig. 6 ist die elektrische Verbindungsdose gemäß dem ersten bevorzugten Ausführungsbeispiel der Erfindung in einer perspektivischen Ansicht ersichtlich, wobei das Verbindungselement 4 mit seinen Anschlusseinrichtungen 5 nun um 45° versetzt orientiert ist, indem die Eingriffselemente 8 in eine jeweils benachbarte Kulissenführung 7 eingesetzt worden sind.

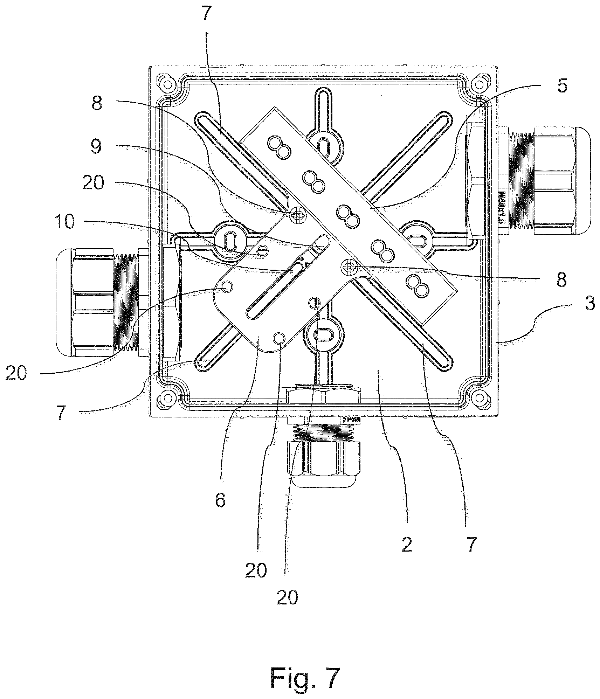

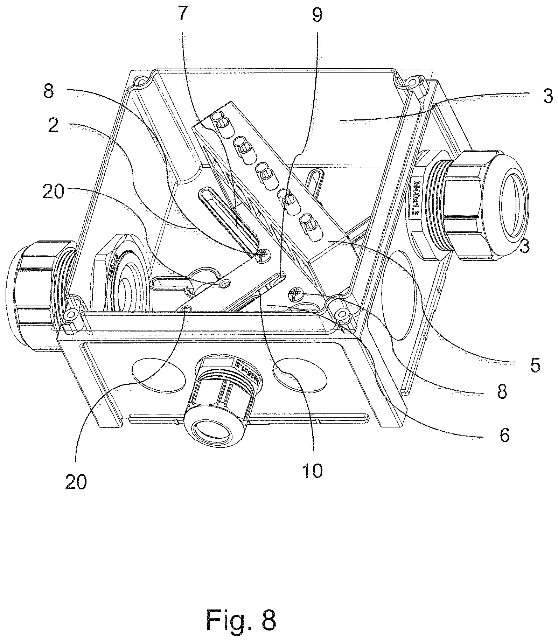

Fig. 7 und 8 zeigen eine elektrische Verbindungsdose gemäß einem zweiten bevorzugten Ausführungsbeispiel der Erfindung in Draufsicht bzw. in einer perspektivischen Ansicht. Dieses zweite bevorzugte Ausführungsbeispiel der Erfindung stellt zu dem ersten bevorzugten Ausführungsbeispiel insofern eine Alternative dar, als dass die Führungseinrichtung 9 nicht als Schraube sondern als Führungsstift derart ausgestaltet ist, so dass die Führungseinrichtung 9 lediglich eine Führung jedoch keine Fixierung in der Kulissenführung 7 erlaubt. Die Eingriffselemente 8 werden von in die Kulissenführungen 7 einschraubbaren Schrauben gebildet, mittels derer das Verbindungselement 4 mit seinem Befestigungsabschnitt 6 an dem Gehäuseboden 2 fixiert werden kann. Im Befestigungsabschnitt 6 des Verbindungselements 4 sind drei Paare von Bohrungen 20 vorgesehen, die auf einander gegenüberliegenden Seiten des Langlochs 10 angeordnet sind und deren Verbindungslinie im rechten Winkel zum Langloch 10 verläuft.

**Bezugszeichenliste**

| | |
|---|---|
| Gehäuse | 1 |
| Gehäuseboden | 2 |
| Gehäusewände | 3 |
| Verbindungselement | 4 |
| Anschlusseinrichtungen | 5 |
| Befestigungsabschnitt | 6 |
| Kulissenführung | 7 |
| Eingriffselement | 8 |
| Führungseinrichtung | 9 |
| Langloch | 10 |
| Befestigungsvorrichtung | 11 |
| Befestigungsöffnung | 12 |
| Abdichtelement | 13 |
| Abdichtdeckel | 14 |
| Gegenelement | 15 |
| Kabelverschraubung | 16 |
| Unterlegscheibe | 17 |
| Filmscharnier | 18 |
| Auskragung | 19 |
| Bohrungen | 20 |

## Patentansprüche

1. Elektrische Verbindungsdose mit einem einen Gehäuseboden (2) und Gehäusewände (3) aufweisenden und mit einem Deckel verschließbaren Gehäuse (1) und einem in dem Gehäuse (1) vorgesehenen Verbindungselement (4) zum Verbinden, von dem Gehäuse (1) zugeführten elektrischen Leitungen miteinander und/oder mit anderen elektrischen oder elektronischen Einrichtungen, wobei
das Verbindungselement (4) Anschlusseinrichtungen (5) zum elektrischen Anschließen der Leitungen und einen Befestigungsabschnitt (6) aufweist,
in dem Gehäuseboden (2) wenigstens eine Kulissenführung (7) in Form einer Nut vorgesehen ist, und
der Befestigungsabschnitt (6) ein Eingriffselement (8) aufweist, das in die Kulissenführung (7) eingreift,
**dadurch gekennzeichnet, dass**
an dem Gehäuseboden (2) eine in den Innenraum des Gehäuses (1) hineinragende Führungseinrichtung (9) angeordnet ist, und
der Befestigungsabschnitt (6) parallel zum Gehäuseboden (2) verläuft und ein Langloch (10) aufweist, in das die Führungseinrichtung (9) hineinreicht.

2. Elektrische Verbindungsdose nach Anspruch 1, **dadurch gekennzeichnet, dass** die Führungseinrichtung (9) von einer Schraube gebildet ist, mittels derer das Verbindungselement (4) mit seinem Befestigungsabschnitt (6) an dem Gehäuseboden (2) fixierbar ist.

3. Elektrische Verbindungsdose nach Anspruch 2, **dadurch gekennzeichnet, dass** das Eingriffselement (8) derart als Eingriffsnase ausgestaltet ist, dass es lediglich eine Führung jedoch keine Fixierung in der Kulissenführung (7) erlaubt.

4. Elektrische Verbindungsdose nach Anspruch 2 oder 3, **dadurch gekennzeichnet, dass** die Schraube mit einer metallischen, auf der Außenseite des Gehäusebodens (2) vorgesehenen Befestigungsvorrichtung (11) verbunden ist, mit der das Gehäuse (1) an einer Wand befestigbar ist.

5. Elektrische Verbindungsdose nach einem der Ansprüche 2 bis 4, **dadurch gekennzeichnet, dass** die Befestigungsvorrichtung (11) wenigstens an einer Seite mit einem Abschnitt über den Gehäuseboden (2) hinausreicht, so dass der über den Gehäuseboden (2) hinausreichende Abschnitt der Befestigungsvorrichtung (11) bei der Befestigung des Gehäuses (1) an der Wand zugänglich ist.

6. Elektrische Verbindungsdose nach einem der Ansprüche 2 bis 5, **dadurch gekennzeichnet, dass** die Schraube in abgedichteter Weise durch den Gehäuseboden (2) auf die Außenseite des Gehäuses (1) geführt ist.

7. Elektrische Verbindungsdose nach Anspruch 6, **dadurch gekennzeichnet, dass** die Schraube zur Abdichtung des Gehäuses (1) von einem Abdichtelement (13) umgeben ist, das eine Öffnung zur Betätigung der Schraube aufweist, wobei diese Öffnung mittels eine Abdichtdeckels (14) in abdichtender Weise verschließbar ist.

8. Elektrische Verbindungsdose nach Anspruch 1, **dadurch gekennzeichnet, dass** die Führungseinrichtung (9) als Führungsstift derart ausgestaltet ist, dass sie lediglich eine Führung jedoch keine Fixierung in der Kulissenführung (7) erlaubt.

9. Elektrische Verbindungsdose nach Anspruch 8, **dadurch gekennzeichnet, dass** das Eingriffselement (8) von einer in die Kulissenführung (7) einschraubbaren Schraube gebildet ist, mittels derer das Verbindungselement (4) mit seinem Befestigungsabschnitt (6) an dem Gehäuseboden (2) fixierbar ist.

10. Elektrische Verbindungsdose nach Anspruch 8 oder 9, **dadurch gekennzeichnet, dass** im Befestigungsabschnitt (6) des Verbindungselements (4) wenigstens ein Paar von Bohrungen (20) vorgesehen ist, die auf einander gegenüberliegenden Seiten des Langlochs (10) angeordnet sind und deren Verbindungslinie vorzugsweise im rechten Winkel zum Langloch (10) verläuft.

11. Elektrische Verbindungsdose nach einem der vorherigen Ansprüche, **dadurch gekennzeichnet, dass** die Führungseinrichtung (9) zentral in dem Gehäuseboden (2) angeordnet ist.

12. Elektrische Verbindungsdose nach einem der vorherigen Ansprüche, **dadurch gekennzeichnet, dass** eine Mehrzahl von gerade verlaufenden Kulissenführungen (7) vorgesehen sind, die in dem Gehäuseboden (2) sternförmig angeordnet sind.

13. Elektrische Verbindungsdose nach einem der vorherigen Ansprüche, **dadurch gekennzeichnet, dass** die Kulissenführungen (7) sternförmig von einer zentralen Führungseinrichtung (9) ausgehen.

14. Elektrische Verbindungsdose nach einem der vorherigen Ansprüche, **dadurch gekennzeichnet, dass** der Befestigungsabschnitt (6) zwei Eingriffselemente (8) aufweist, die auf zwei verschiedenen Seiten des Langlochs (10) in jeweils eine Kulissenführung (7) eingreifen.

15. Elektrische Verbindungsdose nach einem der vorherigen Ansprüche, **dadurch gekennzeichnet, dass** einerseits das Gehäuse (1) aus einem Kunststoffmaterial besteht und andererseits das Verbindungselement (4) und die Anschlusseinrichtungen (5) ausschließlich aus Metall- bzw. Keramikmaterialien bestehen.

## Claims

1. An electrical junction box, comprising a housing (1) that includes a housing bottom (2) and housing walls and can be closed by a cover, and a connecting element (4), which is provided in the housing (1) for connecting electrical lines fed from the housing (1) to one another and/or to other electrical or electronic devices,
the connecting element (4) comprising terminal devices (5) for electrically connecting the lines and an attachment section (6),
at least one slotted guide system (7) in the form of a groove being provided in the housing bottom (2), and
the attachment section (6) comprising an engagement element (8) engaging in the slotted guide system (7),
**characterized in that**
a guiding device (9) protruding into the interior of the housing (1) is arranged at the housing bottom (2), and
the attachment section (6) runs parallel to the housing bottom (2) and includes an elongated hole (10) into which the guiding device (9) extends.

2. The electrical junction box according to claim 1, **characterized in that** the guiding device (9) is formed by a screw, by means of which the connecting element (4) can be fixed with the attachment section (6) thereof to the housing bottom (2).

3. The electrical junction box according to claim 2, **characterized in that** the engagement element (8) is configured as an engagement nose so as to only allow guidance, but no fixation in the slotted guide system (7).

4. The electrical junction box according to claim 2 or 3, **characterized in that** the screw is connected to a metallic attachment device (11), which is provided on the outside of the housing bottom (2) and by which the housing (1) can be attached to a wall.

5. An electrical junction box according to any one of claims 2 to 4, **characterized in that** the attachment device (11), at least on one side, extends with a section beyond the housing bottom (2), so that the section of the attachment device (11) extending beyond the housing bottom (2) is accessible during the attachment of the housing (1) to the wall.

6. An electrical junction box according to any one of claims 2 to 5, **characterized in that** the screw is guided in a sealed manner through the housing bottom (2) to the outside of the housing (1).

7. The electrical junction box according to claim 6, **characterized in that** the screw, for the purpose of sealing the housing (1), is surrounded by a sealing element (13), which includes an opening for actuating the screw, this opening being closable in a sealing manner by means of a sealing cover (14).

8. The electrical junction box according to claim 1, **characterized in that** the guiding device (9) is configured as a guiding pin so as to only allow guidance, but no fixation in the slotted guide system (7).

9. The electrical junction box according to claim 8, **characterized in that** the engagement element (8) is formed by a screw, which can be screwed into the slotted guide system (7) and by means of which the connecting element (4) can be fixed with the attachment section (6) thereof to the housing bottom (2).

10. The electrical junction box according to claim 8 or 9, **characterized in that** at least one pair of boreholes (20) is provided in the attachment section (6) of the connecting element (4), which are arranged on opposite sides of the elongated hole (10) and the connecting line of which preferably extends at a right angle with respect to the elongated hole (10).

11. An electrical junction box according to any one of the preceding claims, **characterized in that** the guiding device (9) is arranged centrally in the housing bottom (2).

12. An electrical junction box according to any one of the preceding claims, **characterized in that** a plurality of linearly extending slotted guide systems (7) are provided, which are arranged in a star-shaped manner in the housing bottom (2).

13. An electrical junction box according to any one of the preceding claims, **characterized in that** the slotted guide systems (7) extend in a star-shaped manner from a central guiding device (9).

14. An electrical junction box according to any one of the preceding claims, **characterized in that** the attachment section (6) comprises two engagement elements (8), which engage in a respective slotted guide system (7) on two different sides of the elongated hole (10).

15. An electrical junction box according to any one of the preceding claims, **characterized in that**, on the one hand, the housing (1) is made of a plastic material and, on the other hand, the connecting element (4) and the terminal devices (5) are made exclusively of metal or ceramic materials.

## Revendications

1. Boite de connexion électrique avec un boitier (1), présentant une base de boitier (2) et des parois de boitier (3) et pouvant être fermé avec un couvercle, et un élément de connexion (4) prévu dans le boitier (1) pour la connexion de lignes électriques menant vers le boitier (1) les unes avec les autres et/ou avec d'autres dispositifs électriques ou électroniques, dans lequel
l'élément de connexion (4) présente des dispositifs connecteurs (5) permettant la connexion électrique des lignes et d'un segment de fixation (6),
au moins une coulisse de guidage (7) sous la forme d'une rainure est prévue dans la base de boitier (2), et
le segment de fixation (6) présente un élément d'insertion (8) qui se met en prise dans la coulisse de guidage (7),
**caractérisée en ce**
**qu'**un dispositif de guidage (9) pénétrant dans l'espace intérieur du boitier (1) est disposé sur la base de boitier (2), et
le segment de fixation (6) s'étend parallèlement par rapport à la base de boitier (2) et présente un trou oblong (10) dans lequel le dispositif de guidage (9) pénètre.

2. Boite de connexion électrique selon la revendication 1, **caractérisée en ce que** le dispositif de guidage (9) est formé par une vis, au moyen de laquelle l'élément de connexion (4) peut être fixé sur la base de boitier (2) avec son segment de fixation (6).

3. Boite de connexion électrique selon la revendication 2, **caractérisée en ce que** l'élément d'insertion (8) est conçu sous forme de nez d'insertion de telle manière qu'il permet simplement un guidage sans pour autant une fixation dans la coulisse de guidage (7).

4. Boite de connexion électrique selon la revendication 2 ou la revendication 3, **caractérisée en ce que** la vis est reliée avec un dispositif de fixation (11) métallique, prévu sur le côté extérieur du base de boitier (2), avec lequel le boitier (1) peut être fixé sur un mur.

5. Boite de connexion électrique selon l'une des revendications 2 à 4, **caractérisée en ce que** le dispositif de fixation (11) dépasse au moins sur un côté avec un segment par-dessus la base de boitier (2), de sorte que le segment du dispositif de fixation (11) dépassant par-dessus la base de boitier (2) est accessible lors de la fixation du boitier (1) sur le mur.

6. Boite de connexion électrique selon l'une des revendications 2 à 5, **caractérisée en ce que** la vis est menée de manière étanche à travers la base de boitier (2) jusqu'au côté extérieur du boitier (1).

7. Boite de connexion électrique selon la revendication 6, **caractérisée en ce que** la vis est entourée d'un élément d'étanchéité (13) pour rendre le boitier (1) étanche, qui présente un orifice pour l'actionnement de la vis, où cette orifice peut être fermé de manière étanche au moyen d'un couvercle d'étanchéité (14).

8. Boit de connexion électrique selon la revendication 1, **caractérisée en ce que** le dispositif de guidage (9) est conçu sous forme d'un stylet de guidage de telle manière qu'il permette simplement un guidage, sans pour autant une fixation, dans la coulisse de guidage (7).

9. Boite de connexion électrique selon la revendication 8, **caractérisée en ce que** l'élément d'insertion (8) est formé par une vis pouvant être vissée dans la coulisse de guidage (7), au moyen de laquelle l'élément de connexion (4) peut être fixé sur la base de boitier (2) avec son segment de fixation (6).

10. Boite de connexion électrique selon la revendication 8 ou la revendication 9, **caractérisée en ce qu'**au moins une paire d'alésages (20) est prévue sur le segment de fixation (6) de l'élément de connexion (4), qui est disposée sur des côtés du trou oblong (10) situés l'un en face de l'autre et dont la ligne de liaison s'étend de préférence en faisant un angle droit avec le trou oblong (10).

11. Boite de connexion électrique selon l'une des revendications précédentes, **caractérisée en ce que** le dispositif de guidage (9) est disposé de manière centrale dans la base de boitier (2).

12. Boite de connexion électrique selon l'une des revendications précédentes, **caractérisée en ce qu'**une multiplicité de coulisses de guidage (7) s'étendant en ligne droite sont prévues, qui sont disposées en forme d'étoile dans la base de boitier (2).

13. Boite de connexion électrique selon l'une des revendications précédentes, **caractérisée en ce que** les coulisses de guidage (7) partent en forme d'étoile à partir d'un dispositif de guidage (9) central.

14. Boite de connexion électrique selon l'une des revendications précédentes, **caractérisée en ce que** le segment de fixation (6) présente deux éléments d'insertion (8) qui se mettent en prise sur deux côtés différents du trou oblong (10) dans respectivement une coulisse de guidage (7).

15. Boite de connexion électrique selon l'une des revendications précédentes, **caractérisée en ce que** d'une part, le boitier (1) est constitué d'une matière plastique et d'autre part, l'élément de connexion (4) et les dispositifs connecteurs (5) sont constitués exclusivement de matériaux métalliques, respectivement céramiques.
